# EUROPÄISCHE PATENTANMELDUNG

(11) **EP 0 940 375 A2**
(43) Veröffentlichungstag der Anmeldung: **08.09.1999**
(21) Anmeldenummer: 99104124.5
(22) Anmeldetag: 02.03.1999
(51) Int. Cl.: C04B 26/02, C04B 40/00

(54) **Verfahren und Einrichtung zur Herstellung von Formteilen aus Reaktionsharzbeton**

(30) Priorität: 04.03.1998 DE 19809107
(71) Anmelder: ILOMA AUTOMATISIERUNGSTECHNIK GmbH, D-49086 Osnabrück (DE)
(72) Erfinder: Die Erfindernennung liegt noch nicht vor
(74) Vertreter: Busse & Busse Patentanwälte

(57) **Zusammenfassung**

Bei der Herstellung von Formteilen aus Reaktionsharzbeton werden vorgegebene Anteile an quarzitischen Zuschlagstoffen unterschiedlicher Korngrößenbereiche mit einem Anteil an flüssigem Harz und mit Anteilen an Reaktionsmitteln wie Härter- und Beschleunigeranteilen in einem Mischer zusammengeführt, mittels eines Mischwerkzeugs zu einer verarbeitungsfertigen Betonmasse vermischt und nach Formgebung in einer Formvorrichtung die Formteile anschließend ausgehärtet. Dabei wird der Mehl- und der Feinsandanteil der Zuschlagstoffe einerseits und der Kiesanteil der Zuschlagstoffe andererseits getrennt in gesonderten Vormischern mit Teilmengen des Harzanteils und der Reaktionsmittelanteile vorgemischt, und die getrennt vorgemischten Teilchargen werden in einem Durchlaufmischer zusammengeführt und nach Vermischung zur verarbeitungsfähigen Betonmasse anschließend unmittelbar in die Formvorrichtung überführt. Dem ersten Vormischer ist dabei ein Pufferbehälter und dem Pufferbehälter und dem zweiten Vormischer ein Durchlaufmischer nachgeordnet, der mit der ersten und der zweiten Teilcharge beschickbar ist.

## Beschreibung

Die Erfindung bezieht sich auf ein Verfahren zur Herstellung von Formteilen aus Reaktionsharzbeton gemäß dem Oberbegriff des Anspruchs 1 und auf eine Einrichtung zur Herstellung solcher Formteile gemäß dem Oberbegriff des Anspruchs 17.

Zur Herstellung von Formteilen aus Reaktionsharzbeton, auch Polymerbeton genannt, ist es bekannt, die Anteile der zu erstellenden verarbeitungsfertigen Betonmasse, nämlich die Mehl-, Feinsand- und Kiesanteile der Zuschlagstoffe, den Harzanteil und die Anteile der Reaktionsmittel, nämlich den Beschleuniger- und den Härteranteil, in einem Mischer zusammenzuführen, mit Hilfe eines Mischwerkzeugs zu vermischen und die verarbeitungsfertige Betonmasse anschließend in einer Formvorrichtung zu formen und die gebildeten Formteile anschließend auszuhärten. Dabei ist es bekannt, Chargenmischer mit Rückwerken als Mischwerkzeugen einzusetzen und die in diesen bereiteten Chargen in der Menge auf die herzustellenden Formteile abzustimmen. Eine derartige Betonzubereitung ist umständlich, zeitlich aufwendig und erbringt Formteile, die insbesondere hinsichtlich ihrer mechanischen Eigenschaften zu wünschen übrig lassen.

Es ist auch bekannt, als Mischvorrichtung einen kontinuierlichen Durchlaufmischer einzusetzen und die Bestandteile des herzustellenden Betons diesem Mischer in einem dem Mischungsverhältnis entsprechenden Mengenverhältnis fortlaufend zuzuführen. Als Mischwerkzeug kann dabei eine Mischschnecke Anwendung finden, die mit hohem Durchsatz arbeitet, in der Erzielung der Homogenität der Mischung jedoch zu wünschen übrig läßt. Aus diesem Grunde und auch aus Gründen nicht unerheblicher, durch den Mischvorgang in die Betonmasse eingetragener Lufteinschlüsse sind auch aus solchen Betonmassen gefertigte Formteile hinsichtlich ihrer mechanischen Eigenschaften nicht allenthalben zufriedenstellend.

Die Erfindung befaßt sich mit dem Problem, die Zubereitung der verarbeitungsfertigen Betonmasse und im Zusammenhang damit die Qualität der daraus hergestellten Formteile zu verbessern.

Die Erfindung löst dieses Problem durch ein Verfahren mit den Merkmalen des Anspruchs 1 und durch eine Einrichtung mit den Merkmalen des Anspruchs 17. Hinsichtlich wesentlicher weiterer Ausgestaltungen des Verfahrens wird auf die Ansprüche 2 bis 16, und der Einrichtung auf die Ansprüche 17 bis 26 verwiesen.

Die getrennte Vormischung des Mehlanteils der Zuschlagstoffe mit Harz und dem Beschleunigeranteil schafft insbesondere bei Verwendung eines Dissolvers als Vormischer eine homogene Vermischung der Bestandteile mit einem hohen Grad an Oberflächenbenetzung der Mehlpartikel mit Harz. Bei der anschließenden Einmischung des Feinsandanteils zusammen mit einer weiteren Teilmenge des Harzanteils in diese Vormischung bleibt nicht nur die Oberflächenbenetzung der mehlförmigen Partikel erhalten, sondern es wird auch eine außerordentlich hohe Oberflächenbenetzung des Feinsandanteils erreicht, wobei durch einen Ablauf der Mischvorgänge unter Vakuumeinwirkung sichergestellt werden kann, daß die so gebildete Teilcharge weitgehend von Lufteinschlüssen frei ist. Da die Bildung einer solchen ersten Teilcharge keiner zeitlichen Beschränkung etwa durch einen bevorstehenden Beginn des Aushärtevorganges unterliegt, kann der Mischvorgang zeitlich unabhängig so gestaltet werden, daß ein optimales Ergebnis in der Verteilung der Bestandteile in der Teilcharge erreicht wird, was insbesondere auch bei dem Beschleunigeranteil der Fall ist.

Die getrennte Vormischung einer geringen Teilmenge des Harzanteils mit dem gesamten Härteranteil und dem Kiesanteil der Zuschlagstoffe schafft ebenfalls schon bei kurzer Mischzeit eine vollständige Benetzung der Oberfläche der Partikel mit Harz, zugleich aber auch eine gute Verteilung des Härters in dieser zweiten Teilcharge. Eine besonders gute Verteilung wird erreicht, wenn die eingesetzte Teilmenge des Harzanteils und der Härteranteil untereinander vorvermischt werden, bevor dieser Ansatz dann mit dem Kiesanteil vermischt wird.

Bei der nachfolgenden Zusammenführung der ersten und der zweiten Teilcharge in einem Durchlaufmischer vor der Formvorrichtung erfolgt trotz hohen Durchsatzes die Bildung einer homogenen Mischung der Bestandteile, so daß die verarbeitungsfertige Betonmasse Formteile erbringt, die nach ihrer Aushärtung wesentlich höhere mechanische Eigenschaften, insbesondere wesentlich verbesserte Druck- und Biegezugfestigkeitswerte, darbieten. Infolge der wesentlich verbesserten Vermischung kann mit geringeren Anteilen an Reaktionsmitteln ohne Beeinträchtigung der Produktqualität gearbeitet werden. Zugleich lassen sich kurze Topfzeiten verwirklichen, weil bei der Bildung der zweiten Teilcharge eine Optimierung der Härterverteilung erfolgt, die auch in der verarbeitungsfertigen Betonmasse erhalten bleibt. Kürzere Topf- und Reaktionszeiten sind dabei unabhängig von den Vormischarbeiten, da erst mit dem Zusammenführen der beiden Teilchargen der Härtevorgang angestoßen wird. Dadurch ergibt sich zugleich auch eine bessere Kontrollierbarkeit des Ablaufs des Form- und Aushärtevorganges.

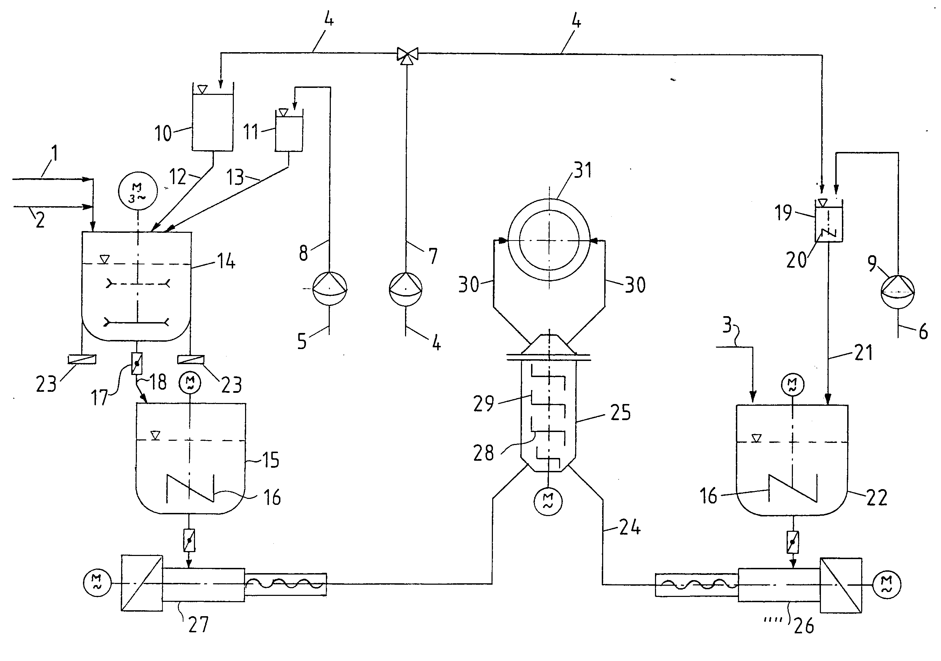

Weitere Einzelheiten und Wirkungen ergeben sich aus der nachfolgenden Beschreibung eines Ausführungsbeispiels des Gegenstands der Erfindung und der Zeichnung, in der schematisch eine Einrichtung nach der Erfindung zur Herstellung von Formteilen aus Reaktionsbeton veranschaulicht ist.

Zur erfindungsgemäßen Herstellung von Formteilen aus Reaktionsharzbeton werden vorgegebene Anteile an quarzitischen Zuschlagstoffen, Harz in bevorzugt flüssiger Form und Reaktionsmittel wie Beschleuniger und Härter verwendet. Die verarbeitungsfertige Betonmasse kann sich beispielsweise nach den Richtlinien der Ausfallkörnung aus
18% Quarzmehl der Körnung 0-0,1 mm,
27 % Feinsand der Körnung 0,1-1 mm und
42 % Kies der Körnung 3-5 mm sowie
13 % Harz
zusammensetzen, wobei in dem Harzanteil auf dessen Menge bezogen beispielsweise 1,5 % Beschleuniger und etwa 1,5 % Härter enthalten sein können. Sämtliche vorstehenden und nachfolgenden Prozentangaben beziehen sich auf Gewichtsanteile.

Die jeweiligen Anteile werden Vorratsbehältern entnommen, die in der Zeichnung nicht näher veranschaulicht sind. Die von den jeweiligen Vorratsbehältern kommenden Förderleitungen sind mit 1 und 2 für Mehl bzw. Feinsand, 3 für Kies, 4 für Harz, 5 für Beschleuniger und 6 für Härter bezeichnet. Zur Förderung der Bestandteile Harz, Beschleuniger und Härter finden Pumpen 7, 8 bzw. 9 Verwendung, während für das Fördern der Anteile an Zuschlagstoffen Förderschnecken, -ketten od.dgl. Fördermittel Anwendung finden können.

Erfindungsgemäß werden zunächst zumindest zwei Teilchargen zubereitet, von denen die erste Teilcharge zumindest den Mehlanteil der Zuschlagstoffe und den größten Teil des Harzanteils, z.B. eine Teilmenge von 60%, sowie den gesamten Beschleunigeranteil umfaßt. Harz und Beschleuniger werden aus Zwischenbehältern 10,11 über Leitungen 12,13 einem Vormischer 14 zugeführt, der bevorzugt als Dissolver mit einstellbarer Dissolverscheibe ausgebildet ist. Nach Zuführung von Harz und Beschleuniger in den Vormischer 14 bei laufender Dissolverscheibe wird über eine Dosierschnecke der Mehlanteil der Zuschlagstoffe in den Vormischer 14 eingeführt, wonach gemäß einem vorgegebenen Programmablauf für die Drehzahl und die Höhenlage der Dissolverscheibe das im Vormischerbehälter enthaltene Gemisch dispergiert wird. Der Dispersionsvorgang wird solange fortgesetzt, bis beispielsweise in der Masse eine Temperatur von 40° bis 60°C, vorzugsweise 50°C, erreicht ist. Danach wird dann eine weitere Teilmenge an Harz, z.B. 30% des Harzanteils, und der gesamte Feinsandanteil zugegeben und mit der zuvor gebildeten Vormischung innig vermischt, so daß insgesamt eine homogene erste Teilcharge gebildet ist. Die zweite Teilmenge an Harz und der Feinsandanteil können grundsätzlich auch in einem gesonderten zusätzlichen Vormischer vermischt und nach der Vormischung in den Vormischer 14 oder einen Pufferbehälter 15 überführt und in diesem zur ersten Teilcharge vermischt werden.

Während des Misch- bzw. Dispersionsvorganges im Vormischer 14 kann eine Beheizung der Mischungsbestandteile stattfinden. Zugleich wird vorteilhaft der Innenraum des Vormischers 14 an eine nicht dargestellte Vakuumquelle angelegt, um eine Entgasung der Mischungsbestandteile herbeizuführen und zu vermeiden, daß sich in der ersten Teilcharge Lufteinschlüsse bilden. Die dem Vormischer 14 zugeführten Bestandteile können aber auch bereits in den Vorratsbehältern, in den Zwischenbehältern 10,11 oder in den Zuführungsleitungen vorerwärmt werden, wobei eine Erwärmung auf 40°-60°C, vorzugsweise 50°C, in der fertigen ersten Teilcharge erwünscht ist.

Nach Fertigstellung der ersten Teilcharge im Vormischer 14 wird diese über eine durch Ventil 17 gesteuerte Übergangsleitung 18 in einen Pufferbehälter 15 mit Rührwerk 16 überführt, damit während der Zubereitung einer neuen ersten Teilcharge bereits ein Mengenstrom zur weiteren Verarbeitung abgefördert werden kann. Der Pufferbehälter 15 ist vorteilhaft ebenfalls an die Vakuumquelle angeschlossen und kann beheizt sein, um in der in ihm enthaltenen Masse eine vorgebene Temperatur aufrechtzuerhalten.

Zumindest teilsweise zeitgleich wird eine zweite Teilcharge zubereitet, die die restliche Teilmenge des Harzanteils, z.B. 10%, den gesamten Härteranteil und den gesamten Kiesanteil der Zuschlagstoffe umfaßt. Die Teilmenge an Harz und der Härter werden zunächst einem Zwischenbehälter 19 zugeführt, in dem sie miteinander durch ein Mischwerkzeug 20 vorvermischt werden. Danach wird über eine Zuleitung 21 dieser Harz/Härter-Ansatz in einen zweiten Vormischer 22 überführt, in den gleichzeitig der Kiesanteil eingefördert wird. Der Kiesanteil kann über einen Dosierförderer zugeführt und mengenmäßig bestimmt werden, jedoch ist es auch möglich, ebenso wie den Vormischer 14 auch den Vormischer 22 auf Druckmeßdosen 23 abzustützen, um über dieseeine Gewichtsbestimmung vorzunehmen. In einem relativ schnellen Mischvorgang werden Harz mit Härter und Kiesanteil der Zuschlagstoffe miteinander vermischt, wobei eine vollständige Oberflächenbenetzung der Partikel auch bei der nur geringen Harzmenge gewährleistet ist, da die Oberfläche des Kiesanteils im Vergleich zur Oberfläche des Mehlanteils, die über 90% der Gesamtoberfläche einnimmt, nur etwa 5% der Gesamtoberfläche aller Zuschlagstoffpartikel einnimmt. Mit der gleichmäßigen Verteilung des Harzes in der Kiesmasse erfolgt auch eine entsprechend gleichmäßige Verteilung des Härters, was für den späteren Ablauf des Härtevorganges von erheblicher Bedeutung ist.

Nach Fertigstellung der zweiten Teilcharge könnte diese ebenfalls in einen Pufferbehälter überführt werden, um ein Abfördern zu ermöglichen, während eine neue zweite Teilcharge zubereitet wird. Bei der Kürze des Zubereitungsvorganges der zweiten Teilcharge kann hierauf jedoch auch verzichtet werden, wie das bei der dargestellten Einrichtung der Fall ist, bei der dem Vormischer 22 eine Exzenterschneckenpumpe 26 zur mengengeregelten Überführung der zweiten Teilcharge über eine Leitung 24 zu einem Durchlaufmischer 25 nachgeordnet ist. Gleichzeitig wird dem Durchlaufmischer 25 auch durch eine dem Pufferbehälter 15 nachgeordnete Exzenterschneckenpumpe 27 ein geregelter Mengenstrom an erster Teilcharge zugeführt. Durch diese geregelte Mengenstromzuführung wird sichergestellt, daß in dem als mehrstufiger Wirbelmischer ausgebildeten Durchlaufmischer 25 eine verarbeitungsfertige Betonmasse gebildet wird, in der die Bestandteile mit den jeweils vorgegebenen Anteilen enthalten sind.

Der zweite Vormischer 22 ist vorteilhaft beheizbar und an die Vakuumquelle anschließbar. Auch der Durchlaufmischer 25 ist vorteilhaft beheizbar und mit der Vakuumquelle verbindbar, so daß auch bei der Bildung der verarbeitungsfertigen Betonmasse im Durchlaufmischer 25 einer Bildung von Lufteinschlüssen entgegengewirkt wird.

Der Durchlaufmischer 25 weist eine Anzahl von koaxial hintereinander angeordneten, koaxial umlaufend angetriebenen, im wesentlichen radial ausgerichteten Mischflügeln 28 auf, die ein- oder beidseitig mit Mischstiften 29 besetzt sind.

Im Durchlaufmischer 25 findet bei hohem Durchsatz eine erhebliche Verwirbelung der zugeführten Bestandteile statt, mit der Folge einer homogenen Gemischbildung, so daß am Abgabeende des Durchlaufmischers 25 eine homogene, verarbeitungsfertige Betonmasse vorliegt. Diese Betonmasse wird über eine oder mehrere Leitungen 30 in eine im Durchlauf arbeitende Formvorrichtung 31 überführt, in der beispielsweise Rohre als Formteile in einem kontinuierlichen Verfahren gebildet werden. Die Einmündungen der Leitungen 30 in den Formraum der Formvorrichtung 31 liegen zur Vermeidung von Lufteinschlüssen vorteilhaft unterhalb eines sich im Formraum der Formvorrichtung 31 ausbildenden oberen Materialsspiegels.

Da durch Zusammenführen der ersten und der zweiten Teilcharge im Durchlaufmischer 25 der Beginn des Härtevorgang eingeleitet wird, tritt während des Materialdurchganges durch den Formraum der Formvorrichtung 31 ein Härtevorgang ein, der dem aus dem Formraum austretenden Formteil eine hinreichende Festigkeit für eine weitere Handhabung verleiht.

## Patentansprüche

1. Verfahren zur Herstellung von Formteilen aus Reaktionsharzbeton, bei dem vorgegebene Anteile an Zuschlagstoffen unterschiedlicher Korngrößenbereiche, nämlich Mehl-, Feinsand- und Kiesanteile, mit einem Anteil an flüssigem Harz und mit Anteilen an Reaktionsmitteln, nämlich Härter- und Beschleunigeranteilen, in einem Mischer zusammengeführt, mittels eines Mischwerkzeugs zu einer verarbeitungsfertigen Betonmasse vermischt und nach Formgebung in einer Formvorrichtung die Formteile anschließend ausgehärtet werden, **dadurch gekennzeichnet,** daß der Mehl- und der Feinsandanteil der Zuschlagstoffe sowie zumindest eine Teilmenge des Beschleunigeranteils einerseits und der Kiesanteil der Zuschlagstoffe sowie zumindest eine Teilmenge des Härteranteils andererseits getrennt in gesonderten Vormischern jeweils mit Teilmengen des Harzanteils vorgemischt, die getrennt vorgemischten Teilchargen in einem Durchlaufmischer zusammengeführt und nach Vermischung zur verarbeitungsfähigen Betonmasse anschließend unmittelbar in die Formvorrichtung überführt werden.

2. Verfahren nach Anspruch 1, **dadurch gekennzeichnet,** daß im ersten Vormischer der gesamte Mehlanteil der Zuschlagstoffe mit dem größten Teil des Harzanteils und dem gesamten Beschleunigeranteil vorgemischt und in diese Vormischung der Feinsand mit einem weiteren Teil des Harzanteils eingemischt wird.

3. Verfahren nach Anspruch 2, **dadurch gekennzeichnet,** daß zunächst eine erste Teilmenge des Harzanteils mit dem Beschleunigeranteil vermischt, in diesen Ansatz der gesamte Mehlanteil der Zuschlagstoffe eingemischt und in diese Vormischung anschließend der gesamte Feinsandanteil gemeinsam mit einem weiteren Teil des Harzanteils zur Bildung der ersten Teilcharge eingemischt wird.

4. Verfahren nach einem der Ansprüche 1 bis 3, **dadurch gekennzeichnet,** daß die die erste Teilcharge bildenden Mischungsbestandteile in einem Dissolver als Vormischer dispergiert werden.

5. Verfahren nach einem der Ansprüche 1 bis 4, **dadurch gekennzeichnet,** daß die Bestandteile der ersten Teilcharge vor und/oder bei der Vermischung erwärmt werden.

6. Verfahren nach Anspruch 5, **dadurch gekennzeichnet,** daß eine Erwärmung auf eine Temperatur von 40 bis 60°C, vorzugsweise 45 bis 50°C, vorgenommen wird.

7. Verfahren nach einem der Ansprüche 1 bis 6, **dadurch gekennzeichnet,** daß die Vermischung der die erste Teilcharge bildenden Bestandteile unter Vakuum vorgenommen wird.

8. Verfahren nach einem der Ansprüche 1 bis 7, **dadurch gekennzeichnet,** daß die erste Teilcharge nach ihrer Fertigstellung aus dem ersten Vormischer in einen Pufferbehälter überführt wird.

9. Verfahren nach einem der Ansprüche 1 bis 8, **dadurch gekennzeichnet,** daß der Vormisch- und der Pufferbehälter unter Vakuum gehalten werden.

10. Verfahren nach einem der Ansprüche 1 bis 9, **dadurch gekennzeichnet,** daß der Kiesanteil der Zuschlagstoffe mit einer kleinen Teilmenge an Harz und dem gesamten Härteranteil in einem zweiten Vormischer zu einer zweiten Teilcharge vorgemischt wird.

11. Verfahren nach Anspruch 10, **dadurch gekennzeichnet,** daß vor dem Zusammenführen der kleinen Teilmenge des Harzanteils und des Kiesanteils der Zuschlagstoffe in die Teilmenge des Harzanteils der gesamte Härteranteil eingemischt wird.

12. Verfahren nach Anspruch 10, **dadurch gekennzeichnet,** daß die Vermischung der die die zweite Teilcharge bildenden Bestandteile unter Vakuum vorgenommen wird.

13. Verfahren nach einem der Ansprüche 10 bis 12, **dadurch gekennzeichnet,** daß die Bestandteile vor und/oder bei der Vermischung der zweiten Teilcharge erwärmt werden.

14. Verfahren nach Anspruch 13, **dadurch gekennzeichnet,** daß eine Erwärmung auf eine Temperatur von 40 bis 50°C, vorzugsweise 45°C, vorgenommen wird.

15. Verfahren nach einem der Ansprüche 1 bis 14, **dadurch gekennzeichnet,** daß die erste und die zweite Teilcharge unter Aufrechterhaltung des Vakuums kontinuierlich dem Durchlaufmischer zugeführt und in diesem unter Vakuum fortlaufend zur verarbeitungsfertigen Betonmasse vermischt werden.

16. Verfahren nach Anspruch 15, **dadurch gekennzeichnet,** daß bei der Vermischung der Teilchargen zur verarbeitungsfertigen Betonmasse eine Temperatur von etwa 40 bis 50°C aufrechterhalten wird.

17. Einrichtung zur Herstellung von Formteilen aus Reaktionsharz, mit Vorratsbehältern für die getrennte Bevorratung von Mehl-, Feinsand- und Kiesbestandteilen der Zuschlagstoffe, von flüssigem Harz, von Beschleuniger und von Härter als Reaktionsmitteln, mit einem durch Fördermittel mit den Bestandteilen der zu bildenden verarbeitungsfertigen Betonmasse beschickbaren Mischer und einer aus dem Mischer mit verarbeitungsfertiger Betonmasse beschickbaren Formvorrichtung, **dadurch gekennzeichnet,** daß zumindest zwei Vormischer (14,22) vorgesehen sind, von denen der erste zur Bildung einer ersten Teilcharge mit Harz, dem Beschleunigeranteil und von dem Mehl- und dem Feinsandanteil der Zuschlagstoffe zumindest dem Mehlanteil, und von denen der zweite zur Bildung einer zweiten Teilcharge mit Harz, dem Härteranteil und dem Kiesanteil der Zuschlagstoffe beschickbar ist, dem ersten Vormischer (14) ein Pufferbehälter (15) nachgeordnet ist und dem Pufferbehälter (15) und dem zweiten Vormischer (22) ein Durchlaufmischer (25) nachgeordnet ist, der mit der ersten und der zweiten Teilcharge beschickbar ist.

18. Einrichtung nach Anspruch 17, **dadurch gekennzeichnet,** daß ein zusätzlicher Vormischer vorgesehen ist, der mit Harz und dem Feinsandanteil der Zuschlagstoffe beschickbar und nach deren Vermischung in den ersten Vormscher (14) oder den Pufferbehälter (15) entleerbar ist.

19. Einrichtung nach Anspruch 17 oder 18, **dadurch gekennzeichnet,** daß der erste Vormischer (14) als Dissolver ausgebildet ist.

20. Einrichtung nach Anspruch 17, 18 oder 19, **dadurch gekennzeichnet,** daß der Pufferbehälter (15) und der zweite Vormischer (22) ein Rührwerkzeug (16) aufweisen.

21. Einrichtung nach einem der Ansprüche 17 bis 20, **dadurch gekennzeichnet,** daß dem Pufferbehälter (14) und dem zweiten Vormischer (22) je eine Exzenterschneckenpumpe (26,27) zur Überführung der ersten bzw. der zweiten Teilcharge in den Durchlaufmischer (25) zugeordnet ist.

22. Einrichtung nach einem der Ansprüche 17 bis 21, **dadurch gekennzeichnet,** daß eine Vakuumquelle für den ersten und zweiten Vormischer (14,22), den Pufferbehälter (15) und/oder den Durchlaufmischer (25) vorgesehen ist.

23. Einrichtung nach einem der Ansprüche 17 bis 22, **dadurch gekennzeichnet,** daß eine Heizung für den Vormischer (14,22), den Pufferbehälter (15) und/oder den Durchlaufmischer (25) vorgesehen ist.

24. Einrichtung nach einem der Ansprüche 17 bis 23, **dadurch gekennzeichnet,** daß der Durchlaufmischer (25) als mehrstufiger Wirbelmischer ausgebildet ist.

25. Einrichtung nach einem der Ansprüche 17 bis 24, **dadurch gekennzeichnet**, daß der Auslaß bzw. die Auslässe des Durchlaufmischers (25) an den Einlaß einer Durchlauf-Formvorrichtung (31) angeschlossen sind.

26. Einrichtung nach Anspruch 25, **dadurch gekennzeichnet,** daß die Einmündung der Verbindungsleitung(en) (30) vom Durchlaufmischer (25) zur Formvorrichtung (31) in einem Bereich unterhalb eines sich im Formraum der Formvorrichtung (31) ausbildenden oberen Materialspiegels gelegen ist.
